(19) Europäisches Patentamt
European Patent Office
Office européen des brevets

(11) **EP 4 201 168 B1**

(12) **FASCICULE DE BREVET EUROPEEN**

(45) Date de publication et mention de la délivrance du brevet:
**10.04.2024 Bulletin 2024/15**

(21) Numéro de dépôt: **22212325.9**

(22) Date de dépôt: **08.12.2022**

(51) Classification Internationale des Brevets (IPC):
*A01B 39/16* (2006.01)    *A01D 34/73* (2006.01)
*A01D 46/26* (2006.01)    *A01D 46/28* (2006.01)
*A01G 3/00* (2006.01)    *A01G 3/04* (2006.01)
*A01G 17/02* (2006.01)

(52) Classification Coopérative des Brevets (CPC):
**A01D 46/28; A01B 39/16; A01D 34/73;
A01D 46/26; A01G 3/0408; A01G 17/02**

(54) **DISPOSITIF DE DÉTECTION DE PIQUETS MÉTALLIQUES DANS UNE HAIE VÉGÉTALE CULTURALE PALISSÉE**

VORRICHTUNG ZUR ERKENNUNG VON METALLPFÄHLEN IN EINER SPALIERKULTURPFLANZENHECKE

DEVICE FOR DETECTING METAL POLES IN A CULTURAL HEDGE PROVIDED WITH POLES

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **20.12.2021 FR 2114020**

(43) Date de publication de la demande:
**28.06.2023 Bulletin 2023/26**

(73) Titulaire: **PELLENC
84120 Pertuis (FR)**

(72) Inventeurs:
• **DELCASSO, Laurent
84120 PERTUIS (FR)**
• **ARTINIAN, Sébastien
84120 PERTUIS (FR)**
• **ARNAUTS, Raphaël
13290 LES MILLES (FR)**

(74) Mandataire: **Hautier IP
20, rue de la Liberté
06000 Nice (FR)**

(56) Documents cités:
**FR-A1- 2 878 124    FR-A1- 2 893 223
US-A1- 2006 272 201    US-B1- 7 748 206
US-B2- 7 870 712**

## Description

## Domaine technique

L'invention concerne un dispositif de détection de piquets métalliques dans une haie végétale culturale palissée, ainsi qu'une machine agricole équipée du dispositif de détection et un procédé d'évitement d'un piquet métallique par un organe de travail d'une machine agricole équipée du dispositif de détection, ledit dispositif étant apte à détecter les piquets cachés par la végétation.

## Technique antérieure

Dans le domaine agricole, diverses cultures sont mises en oeuvre à l'aide de piquets métalliques soutenant des haies végétales culturales palissées telles que des rangs de vigne ou autres arbustes fructifères, d'arbres fruitiers, etc.

De telles haies végétales culturales palissées peuvent être traitées mécaniquement au moyen de machines agricoles équipées d'un ou plusieurs organes de travail et destinées à, par exemple, des opérations de coupe, d'écimage, de récolte ou de travail du sol.

Cependant, le traitement mécanique de ces haies contenant des piquets requiert d'ordinaire l'évitement de ces piquets par les organes de travail, soit pour éviter de détériorer les piquets et donc l'ensemble de la haie qu'ils soutiennent, soit pour éviter de détériorer les organes de travail eux-mêmes lors de leur passage au niveau des piquets.

Ainsi, le brevet européen EP 2 227 939 B1 décrit une machine agricole de récolte de fruits équipée d'un capteur situé en amont d'un organe de travail, qui est dans ce cas un organe secoueur prévu pour exercer des forces contre la haie pour en détacher des fruits. FR 2 878 124 A1 divulgue un dispositif de détection de piquet métallique comprenant un senseur générant un signal de détection.

Le capteur permet de détecter la présence d'un piquet, et cette information, couplée à la vitesse de déplacement de la machine agricole le long de la haie, permet lors du passage de l'organe secoueur au niveau du piquet de réduire automatiquement la force exercée par l'organe secoueur pendant une période de temps suffisante pour éviter des dommages au piquet ou à l'organe secoueur.

Cependant, cette solution n'est pas totalement satisfaisante : d'une manière générale, le temps d'évitement des piquets par l'organe de travail doit être minimisé de manière à traiter une haie par une machine le plus complètement possible afin d'améliorer l'efficacité du traitement mécanique et/ou de minimiser la quantité de reprise à effectuer manuellement.

Cette contrainte entre toutefois en conflit avec la nécessité d'éviter de détériorer les piquets de la haie ou l'organe de travail.

Par ailleurs, l'anticipation de l'arrivée du piquet dans l'organe de travail se fait dans l'hypothèse d'un poteau vertical que ce capteur détecte à une hauteur déterminée.

Ainsi, si le piquet est incliné, il est possible que l'organe de travail ne soit pas désactivé à temps pour qu'une première partie du piquet commence à le traverser et en corollaire il est possible que l'organe de travail soit réactivé avant que la dernière partie du piquet ne le traverse, endommageant potentiellement au moins une partie de l'organe de travail.

Dans un domaine similaire, le brevet EP1608216 décrit une machine agricole comportant un dispositif de détection optique apte à détecter des piquets en l'absence de végétation.

En effet, ce dispositif fonctionne sur le principe d'occultation des faisceaux lumineux pour détecter la présence d'un piquet et désactiver l'organe de travail de la machine agricole. Cependant, la présence de végétation telle que des feuilles par exemple masque les faisceaux lumineux, ce qui ne permet pas de détecter la présence d'un piquet.

## Exposé de l'invention

L'invention a pour objectif d'améliorer sensiblement la détection d'éléments susceptibles de détériorer ou d'être détériorés par un organe de travail d'une machine agricole de traitement d'une haie végétale culturale palissée, en n'étant pas perturbé par d'autres obstacles tels que des feuilles par exemple.

L'invention part du constat que la majorité des haies végétales palissées comporte des piquets métalliques pour assurer la rigidité et la longévité du palissage, ces piquets métalliques étant essentiellement constitués de fer et recouverts le cas échéant d'un revêtement protecteur contre la rouille (zinc, plastique, voire béton, ...).

Dans le cas d'une vigne et en fonction du type de vigne, les piquets ont une hauteur variant de 1 à 2 m au-dessus du sol.

L'invention porte plus particulièrement sur un dispositif de détection de piquet métallique dans une haie végétale culturale palissée, comprenant au moins un capteur de piquet métallique conçu pour être déplacé parallèlement à un plan de palissage de la haie et agencé pour générer un signal de détection lorsqu'il passe au droit d'un piquet métallique de la haie comprenant des piquets métalliques, dispositif de détection dans lequel ledit capteur de piquet métallique comporte un premier et un deuxième capteur de métaux agencés pour générer respectivement un premier et un deuxième signal de mesure lorsqu'ils passent au droit d'un des piquets métalliques de la haie, lesdits premier et deuxième capteurs de métaux étant mécaniquement solidaires en déplacement l'un de l'autre et agencés pour être espacés verticalement l'un par rapport à l'autre lors d'une utilisation dudit dispositif, le dispositif de détection comportant en outre une unité de gestion électronique desdits premier et deuxième signaux de détection, configurée pour recevoir le premier signal de mesure et le deuxième signal de mesure et pour, sur détection d'un écart temporel entre des niveaux maximaux de variation des premier et deuxième signaux de mesure, générer un signal indicatif d'un état incliné du piquet métallique par rapport à une direction verticale dans le plan de palissage.

Le dispositif de détection de piquets métalliques selon l'invention permet non seulement de détecter la simple présence d'un tel piquet même masqué par la végétation de la haie, mais également de déterminer que ce piquet est incliné dans le plan de palissage par rapport à la verticale et de délivrer un signal de détection correspondant, ce signal de détection permettant de piloter au mieux au moment du passage du piquet les organes de travail d'une machine agricole équipée de ce dispositif.

Ainsi, avec l'information d'inclinaison d'un piquet venant en plus de la détection du piquet, il est possible d'optimiser le contrôle des organes de travail de manière à optimiser leur emploi tout en réduisant les risques de détérioration du matériel de la haie ou des organes de travail au passage du piquet.

Le dispositif de détection de piquets métalliques selon l'invention peut présenter les caractéristiques suivantes :

- une unité de gestion électronique peut être configurée pour générer un signal représentatif d'un sens d'inclinaison du piquet métallique incliné sur la base d'un ordre chronologique entre des niveaux maximaux de variation des premier et deuxième signaux de mesure ;
- le premier et le deuxième capteur de métaux peuvent chacun comprendre une bobine d'émission et une bobine de réception définissant un axe de détection sur lequel un signal de détection de piquet métallique généré par la bobine de détection en réponse à un signal issu de la bobine de réception est maximum lorsque le capteur correspondant passe au droit du piquet métallique, et le premier et le deuxième signal de mesure peuvent être générés par la bobine de détection du premier et du deuxième capteur, respectivement ;
- le dispositif de détection peut comprendre un portique de détection mobile le long du plan de palissage, ledit portique de détection pouvant comprendre une première et une deuxième branche de portique conçues pour, en cours d'usage, se faire face et se déplacer parallèlement au plan de palissage, la première branche de portique pouvant comporter l'une de la bobine d'émission et de la bobine de réception du premier et du deuxième capteur de métaux, la deuxième branche de portique pouvant comprendre l'autre de la bobine d'émission et de la bobine de réception du premier et du deuxième capteur de métaux, les bobines pouvant être montées sur les branches de portiques de manière telle que, en cours d'usage, les axes de détection des capteurs de métaux soient espacés verticalement l'un de l'autre ;

- la première branche de portique et la deuxième branche de portique peuvent être conçues pour, en cours d'usage, encadrer le plan de palissage ;
- l'unité de gestion électronique peut en outre être configurée de manière à recevoir un signal représentatif d'une vitesse de déplacement d'une machine agricole, généré et envoyé par la machine agricole destinée à déplacer le dispositif de détection ; mesurer un intervalle de temps séparant des niveaux maximaux de variation des premier et deuxième signaux de détection ; et générer un signal représentatif d'une amplitude d'inclinaison du piquet métallique de la haie sur la base du signal représentatif de la vitesse de déplacement de la machine agricole, de l'intervalle de temps et d'un espacement vertical entre les axes de détection respectifs du premier et du deuxième capteur de métaux;
- l'unité de gestion électronique peut être configurée pour générer le signal représentatif d'une amplitude d'inclinaison $\alpha$ du piquet métallique de la haie en employant la formule

$$\alpha = \arctan\left(\frac{V * \Delta t(incl) - L}{H}\right)$$ où V est une variable représentative d'une vitesse de déplacement d'une machine agricole telle qu'indiquée par la machine agricole elle-même, et ou L représente un espacement horizontal entre les axes de détection respectifs du premier et du deuxième capteur de métaux ;
- le capteur de piquet métallique peut comprendre en outre un troisième capteur de métaux agencé pour générer un troisième signal de mesure lorsqu'il passe au droit du piquet métallique de la haie, le troisième capteur de métaux pouvant être mécaniquement solidaire en déplacement du premier et du deuxième capteurs de métaux et espacé horizontalement du premier capteur de métaux, dans lequel l'unité de gestion électronique peut en outre être configurée pour recevoir le troisième signal de détection, et, sur la base d'instants de réceptions respectifs de niveaux maximaux de variation des premier, deuxième et troisième signaux de détection, délivrer un signal représentatif d'une information de vitesse relative de déplacement du dispositif de détection par rapport au piquet métallique de la haie ;
- l'unité de gestion électronique peut être configurée pour générer le signal représentatif d'une amplitude d'inclinaison $\alpha'$ du piquet métallique de la haie en employant la formule

$$\alpha' = \arctan\left(\frac{V_{rel} * \Delta t(incl) - L}{H}\right)$$ où

$V_{rel}$ est une variable représentative d'une vitesse relative de déplacement entre le dispositif de détection et le piquet métallique telle que déterminée sur la base de signaux de mesure du dispositif de détection, et où L représente un espacement horizontal entre les axes de détection respectifs (du premier et du deuxième capteur de métaux

- le troisième capteur de métaux peut comprendre une bobine d'émission et une bobine de réception définissant un axe de détection, l'une de la bobine d'émission et de la bobine de réception pouvant être montée sur la première branche de portique et l'autre de la bobine d'émission et de la bobine de réception pouvant être montée sur la deuxième branche de portique, l'axe de détection du troisième capteur de métaux pouvant être, en cours d'usage du dispositif de détection, espacé horizontalement de l'axe du premier capteur de métaux ; et
- les capteurs de métaux peuvent faire partie de détecteurs magnétiques à induction pulsée.

L'invention peut s'étendre à une machine agricole mobile de traitement de cultures sous forme de haies végétales culturales palissées, pouvant comprendre un organe de travail et un dispositif de détection de piquet métallique selon l'une quelconque des revendications précédentes monté en amont de l'organe de travail par rapport à un sens de déplacement de la machine agricole au cours d'un traitement de haies végétales culturales palissées.

La machine agricole selon l'invention peut présenter les caractéristiques suivantes :

- l'organe de travail peut présenter au moins un état actif et au moins un état neutralisé, l'organe de travail étant conçu de manière à pouvoir être piloté par l'unité de gestion électronique de manière à provoquer un passage temporaire de l'état actif à l'état neutralisé puis un retour à l'état actif en réponse à la génération du signal indicatif d'un état incliné du piquet métallique ; et
- l'organe de travail peut comprendre au moins un ensemble parmi : une paire de têtes de coupe à lames rotatives, les lames rotatives étant destinées à être, en cours d'utilisation, orientées horizontalement, situées de part et d'autre d'une haie végétale culturale palissée et traversant le plan de palissage dans leur état actif ; deux barres de coupe latérales destinées à être, en cours d'utilisation, orientée sensiblement verticalement et une barre de coupe horizontale destinée à être, en cours d'utilisation, orientée sensiblement horizontalement et conçue pour traverser le plan de palissage de manière à écimer l'extrémité supérieure d'une haie végétale culturale palissée ; et deux ensembles de détachement de baies destinés à secouer la haie végétale culturale palissée de manière à récolter des baies issues de cette haie végétale culturale palissée.

L'invention peut également s'étendre à un procédé d'évitement de piquets métalliques d'une haie végétale culturale palissée pour une machine agricole mobile selon l'invention, pouvant comprendre un déplacement de la machine agricole mobile parallèlement à un plan de palissage de la haie ; un traitement de la haie végétale culturale palissée avec l'organe de travail ; et un éloignement temporaire de l'organe de travail par rapport au plan de palissage en réponse à la réception par l'organe de travail du signal de commande délivré par l'unité de gestion électronique.

Le procédé d'évitement selon l'invention peut présenter les caractéristiques suivantes :

- l'éloignement temporaire de l'organe de travail peut être opéré avec un retard par rapport à la génération du signal de détection d'un piquet métallique incliné, le retard pouvant être fonction d'une vitesse de déplacement de la machine agricole et d'au moins l'une parmi une information de sens d'inclinaison du piquet et une amplitude d'inclinaison du piquet.

## Brève description des dessins

La présente invention sera mieux comprise et d'autres avantages apparaîtront à la lecture de la description détaillée du mode de réalisation pris à titre d'exemple nullement limitatif et illustré par les dessins annexés, dans lesquels :

[Fig.1]- la [Fig.1] est une vue générale en perspective du dispositif de détection selon l'invention, en cours d'utilisation ;
[Fig.2]- la [Fig.2] est une vue en perspective du dispositif de détection de la [Fig.1] ;
[Fig.3A]- la [Fig.3A] est une vue schématique de côté d'un dispositif de détection selon l'invention, dans un cas général ;
[Fig.3B]- la [Fig.3B] est un schéma d'une unité de gestion électronique connectée au dispositif illustré par la [Fig.3A] ;
[Fig.4]- la [Fig.4] est une vue schématique de côté du dispositif de détection dans le cas spécifique de la [Fig.1] ;
[Fig.5A]- la [Fig.5A] est une illustration du fonctionnement du dispositif de détection de la [Fig.1] à un premier instant ;
[Fig.5B]- la [Fig.5B] est une illustration du fonctionnement du dispositif de détection de la [Fig.1] à un second instant suivant le premier instant ;
[Fig.5C]- la [Fig.5C] est une illustration du fonctionnement du dispositif de détection de la [Fig.1] à un troisième instant suivant le second instant ;
[Fig.5D]- la [Fig.5D] est une illustration du fonctionnement du dispositif de détection de la [Fig.1] à un quatrième instant suivant le troisième instant ;
[Fig.5E]- la [Fig.5E] est une illustration du fonctionnement du dispositif de détection de la [Fig.1] à un cinquième instant suivant le quatrième instant ;
[Fig.6A]- la [Fig.6A] illustre le principe de la détection du caractère incliné et du sens d'inclinaison d'un piquet sur la base des données obtenues selon la figure 5 ;

[Fig.6B]- la [Fig.6B] illustre le principe de calcul de la vitesse de déplacement de la machine agricole par rapport au piquet incliné de la figure 6 sur la base des données obtenues selon la figure 5 ;

[Fig.7A]- la [Fig.7A] illustre un organe de travail destiné à une opération d'écimage et pouvant être incorporé à une machine agricole selon l'invention ;

[Fig.7B]- la [Fig.7B] illustre un organe de travail destiné à une opération de récolte d'une vigne et pouvant être incorporé à une machine agricole selon l'invention ; et

[Fig.8]- la [Fig.8] est un diagramme illustrant un procédé d'évitement de piquets métalliques selon l'invention.

## Description d'un mode particulier de réalisation du procédé selon l'invention

Le présent mode de réalisation donne un exemple d'application de l'invention à une machine agricole agencée et utilisée avec un organe de travail pour prétailler une vigne palissée à l'aide de piquets métalliques.

L'opération de prétaillage consiste à préparer la taille de finition, manuelle, de la vigne, en coupant les sarments au-dessus du cordon tout en les séparant du palissage sur lequel ils se sont fixés et enchevêtrés au cours de leur croissance, le viticulteur gagnant ainsi du temps lors de la taille de finition par une meilleure visibilité des sarments à tailler.

Au cours de l'opération de prétaillage, l'organe de travail opère au travers du palissage à l'aide de deux empilages de coupe qu'il faut de fait écarter au passage d'un piquet pour éviter de détériorer à la fois l'organe de travail et le piquet.

Cependant, on comprendra à la lecture de l'exposé qui suit que cette invention peut être mise en oeuvre pour l'équipement d'autres machines agricoles telles que des machines d'écimage, ou encore des machines de récolte par exemple, et de façon générale pour tout organe de travail opérant au travers du palissage en ayant besoin de modifier ses conditions de travail au passage d'un piquet.

Toutes ces machines agricoles ont ainsi le besoin d'anticiper le passage d'un piquet du palissage, comme la machine de prétaillage utilisée dans une vigne palissée dans la suite du présent exposé.

En ajoutant le fait que la majorité des vignes palissées le sont avec des piquets métalliques et que ces machines agricoles peuvent avoir besoin de travailler en présence de végétation pouvant masquer les piquets, cela justifie alors l'utilisation d'un dispositif de détection de piquets métalliques selon l'invention.

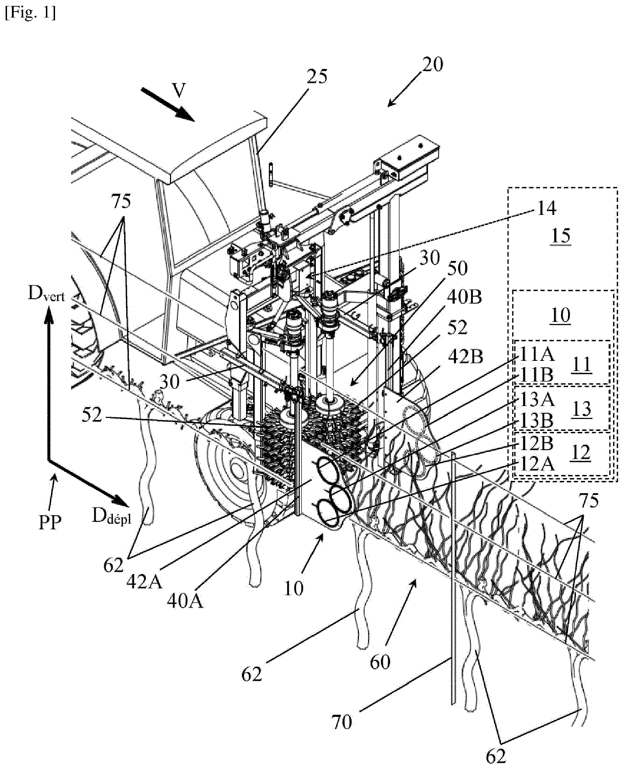

La [Fig.1] illustre un dispositif 15 de détection de piquet métallique équipant une machine agricole 20 de prétaillage.

La machine de prétaillage comprend un organe de travail 50 constitué d'une paire de têtes de coupe à éléments de coupe rotatifs, les éléments de coupe rotatifs 52 étant orientées horizontalement et situées de part et d'autre d'une haie 60 végétale culturale palissée.

Le dispositif 15 de détection comprend un capteur 10 de piquet métallique associé à une unité 14 de gestion électronique pour détecter les piquets et en informer l'organe de travail en approche sur ce piquet.

La haie 60 est formée d'un alignement de pieds 62 de vigne plantés le long d'un plan de palissage PP défini sensiblement par un alignement de piquets métalliques 70 sur lesquels sont tendus des fils 75 de palissage, ces fils étant la plupart du temps de nature métallique.

Cette haie définit deux directions orthogonales $D_{dépl}$, correspondant à la direction de déplacement de la machine agricole selon une direction parallèle au plan de palissage PP, et $D_{vert}$, correspondant à une direction verticale qui est sensiblement celle des piquets métalliques.

Dans la suite de la description, la haie étant constituée intégralement de piquets métalliques, on utilisera simplement le terme piquet pour désigner ces piquets métalliques.

En opération, la machine agricole 20 comprend un tracteur 25 pour la déplacer à une vitesse V selon la direction de déplacement $D_{dépl}$ parallèle à l'alignement de piquets 70 et donc au plan de palissage PP, comme illustré par la [Fig.1].

Lors du prétaillage, les éléments de coupe rotatifs 52 des têtes de coupe traversent le plan de palissage pour en sectionner les sarments 75 tout en se déplaçant parallèlement à celui-ci, et il est nécessaire de les écarter au moment où elles passent au niveau d'un piquet 70.

Les piquets 70 sont constitués majoritairement de fer pour assurer leur rigidité et leur durée de vie nécessaires pour soutenir les pieds de vigne durant toute leur vie.

On peut les trouver sous la forme, par exemple, de cornières métalliques d'une largeur de l'ordre de 30 mm comme représenté sur la [Fig.1].

Ils peuvent être recouverts d'un revêtement protecteur contre la rouille comme un simple traitement de surface tel que le zingage, ou comprendre une âme métallique recouverte de béton ou de plastique.

Il est ainsi possible de mettre à profit la présence d'une grande quantité de fer dans le piquet pour utiliser un dispositif de détection magnétique.

Le dispositif 15 de détection est monté sur la machine agricole 20 de prétaillage, de manière à se situer en amont de l'organe de travail 50 lors d'un déplacement de la machine en cours de travail.

Ainsi, la détection d'un piquet est effectuée avant que l'organe de travail arrive à sa hauteur, ce qui permet d'anticiper et de modifier son mode d'opération afin d'éviter des dommages à l'organe de travail et/ou au piquet.

Dans le cas de la prétailleuse, les éléments de coupe sont éloignés momentanément du plan de palissage pour éviter leur contact avec le piquet.

Le capteur 10 de piquet considéré dans ce mode de réalisation comprend trois paires de bobines, respectivement une première paire de bobines 11A et 11B formant un premier capteur de métaux 11, une deuxième paire de bobines 12A et 12B formant un deuxième capteur de métaux 12 et une troisième paire de bobines 13A et 13B formant un troisième capteur de métaux 13.

Les bobines 11A, 11B, 12A, 12B, 13A et 13B sont constituées d'un enroulement de fil conducteur électrique, sous forme de spires circulaires, de préférence sensiblement plane, c'est-à-dire avec un rapport épaisseur/diamètre de préférence inférieur à 1/10, plus préférablement inférieur à 1/20.

Dans cet exemple, les capteurs de métaux 11, 12 et 13 sont identiques, les bobines les constituant étant connectées de manière filaire (fils de connexion non représentés sur les figures) à une unité 14 de gestion électronique configurée pour, indépendamment pour chaque capteur de métaux, envoyer un signal d'émission à chacune des bobines 11A, 12A et 13A utilisée en tant que bobines d'émission et pour détecter un signal de mesure généré par chacune des bobines 11B, 12B et 13B utilisées comme bobines de réception.

L'unité 14 de gestion électronique est disposée au-dessus des piquets 70 et éloignée du capteur 10 de piquet, de préférence sur le haut de la structure de l'organe de travail 50 de façon à limiter toute interaction au niveau des signaux générés dans le dispositif de détection, mais une telle disposition n'est en rien limitative et l'invention ne se limite pas à cette option.

Il n'est pas nécessaire que les bobines d'émission 11A, 12A et 13A soient toutes situées du même côté de la vigne.

Ainsi, le capteur 10 de piquet est constitué des trois capteurs de métaux 11, 12 et 13 arrangés pour fonctionner séparément, chacun étant piloté par l'unité 14 de gestion électronique.

Dans ce mode de réalisation, les trois capteurs de métaux pilotés par l'unité 14 de gestion électronique forment chacun un capteur magnétique à induction pulsée.

Les bobines de réception 11A, 12A et 13A de chacune des trois paires de bobines sont montées sur une première branche 40A d'un portique 30 de détection montée sur la machine agricole, les bobines de réception 11B, 12B et 13B de chacune des trois paires de bobines sont montées sur une deuxième branche 40B du portique de détection.

Les bobines 11A, 12A et 13A d'émission sont fixées sur une première plaque de montage 42A plane et les bobines 11B, 12B et 13B de réception sont fixées sur une deuxième plaque de montage 42B plane, les plaques 42A et 42B étant conçues pour être montées respectivement sur les première et deuxième branches 40A et 40B, les plaques ainsi que les bobines étant parallèles entre elles et, en cours d'utilisation, au plan de palissage.

Les plaques de montage 42A et 42B sont constituées d'un matériau amagnétique et non conducteur électrique de façon à éviter des effets de couplage entre les bobines d'une même plaque ou des courts-circuits.

Ainsi, seules des masses magnétiques importantes telles que les piquets vont interagir avec les bobines et de plus les bobines seront protégées de la haie végétale par les plaques de montage.

On considère les bobines parallèles aux plaques dans le sens où les surfaces définies par les spires les constituant sont sensiblement parallèles entre elles et aux plaques de montages auxquelles sont respectivement fixées les bobines.

Les bobines sont arrangées sur les plaques de montage 42 de manière à, en cours d'usage, être placées symétriquement par rapport au plan de palissage, les bobines 11A, 12A et 13A faisant respectivement face aux bobines 11B, 12B et 13B à des distances sensiblement égales.

Les bobines, et donc les capteurs, sont considérés comme étant mécaniquement solidaires en déplacement, c'est-à-dire qu'ils sont fixes en position les uns par rapport aux autres, et sont montés de manière à se déplacer ensemble en cours d'opération, parallèlement au plan de palissage de la haie végétale traitée.

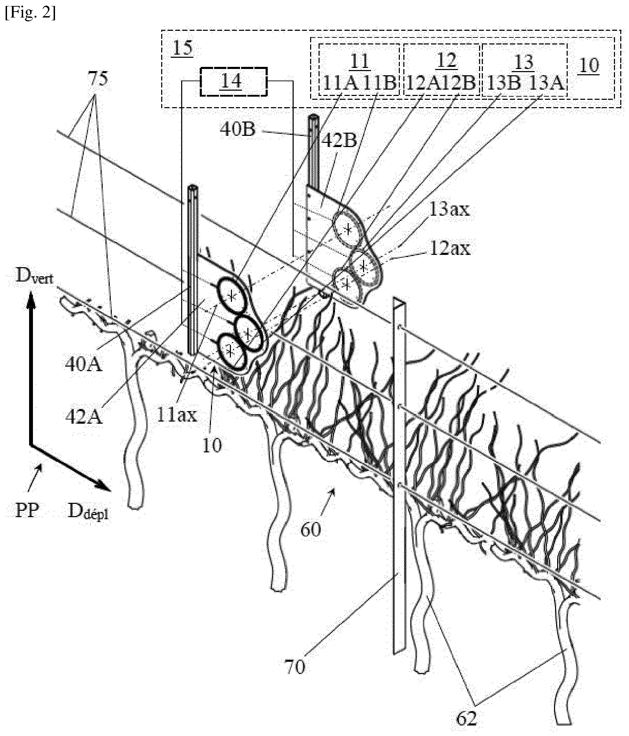

Les centres des bobines formant les trois capteurs de métaux 11, 12 et 13 définissent respectivement des axes de détection 11ax, 12ax et 13ax qui sont les axes de plus grande intensité du champ magnétique généré par les bobines émettrices et qui sont prévus pour être, en cours d'usage, perpendiculaires au plan de palissage PP, comme illustré par la [Fig.2], et donc horizontaux.

D'une manière générale, on considère comme centre des bobines le barycentre des spires de fil conducteur électrique qui les constitue, ce qui s'applique également aux cas où les spires ne seraient pas circulaires.

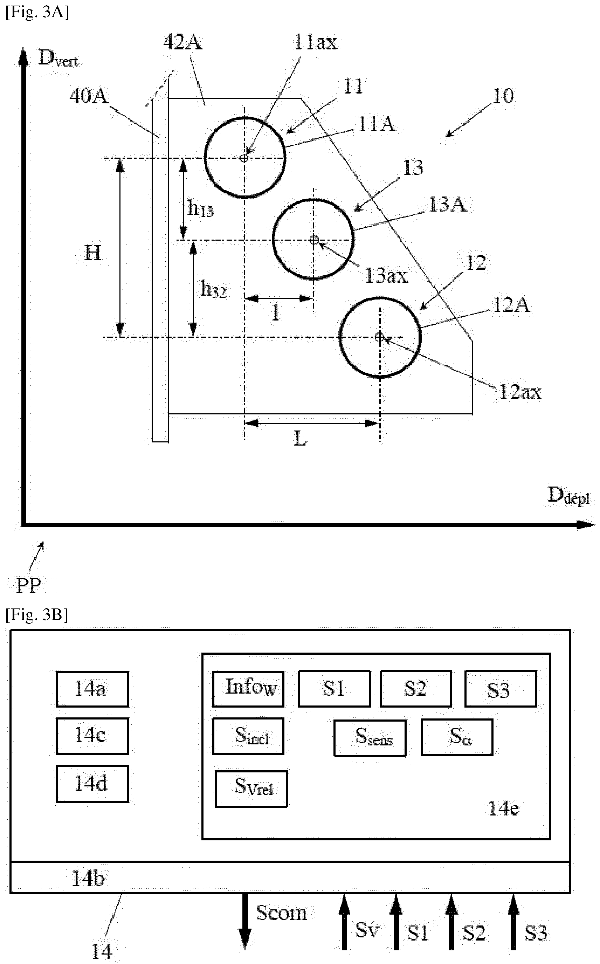

La [Fig.3A] est utilisée pour décrire une géométrie générique de placement des bobines d'émission, selon une vue dans un plan parallèle au plan de palissage, celui de la plaque de montage 42A, pouvant aussi être défini par une direction verticale $D_{vert}$ et une direction de déplacement $D_{dépl}$ du dispositif de détection, en considérant le cas idéal d'un déplacement rectiligne parallèle au plan de palissage sur terrain plat horizontal.

Dans ce repère, on note L la longueur séparant les axes de détection 11ax et 12ax des premier et deuxième capteurs de métaux 11 et 12 selon la direction $D_{dépl}$ de déplacement, l la longueur séparant les axes de détection 11ax et 13ax des premier et troisième capteurs de métaux 11 et 13 selon la direction $D_{dépl}$ de déplacement, H la longueur séparant les axes de détection 11ax et 12ax des premier et deuxième capteurs de métaux 11 et 12 selon la direction $D_{Vert}$ verticale, $h_{13}$ la longueur séparant les axes de détection 11ax et 13ax des premier et troisième capteurs de métaux 11 et 13 selon la direction $D_{Vert}$ verticale, et $h_{32}$ la longueur séparant les axes de détection 13ax et 12ax des troisième et deuxième capteurs de métaux 13 et 12 selon la direction $D_{Vert}$ verticale, avec $H = h_{13} + h_{32}$.

Dans la [Fig.3A], les axes sont représentés par un cercle contenant une croix et sont perpendiculaires au plan de la figure.

Dans ce document, lorsqu'il est fait référence à des distances ou des espacements entre deux capteurs, on comprendra qu'il s'agit de distances ou d'espacement entre les axes de détection respectifs de ces capteurs.

Ainsi, lorsque le dispositif de détection est monté sur la machine agricole, le premier capteur 11 est espacé verticalement du deuxième capteur 12 et situé plus haut que celui-ci, le troisième capteur 13 est espacé verticalement des premier et deuxième capteurs et situé préférablement à un niveau vertical intermédiaire entre ceux des premier et deuxième capteurs, le premier capteur est espacé horizontalement du troisième capteur, et le deuxième capteur peut éventuellement être horizontalement espacé du premier capteur.

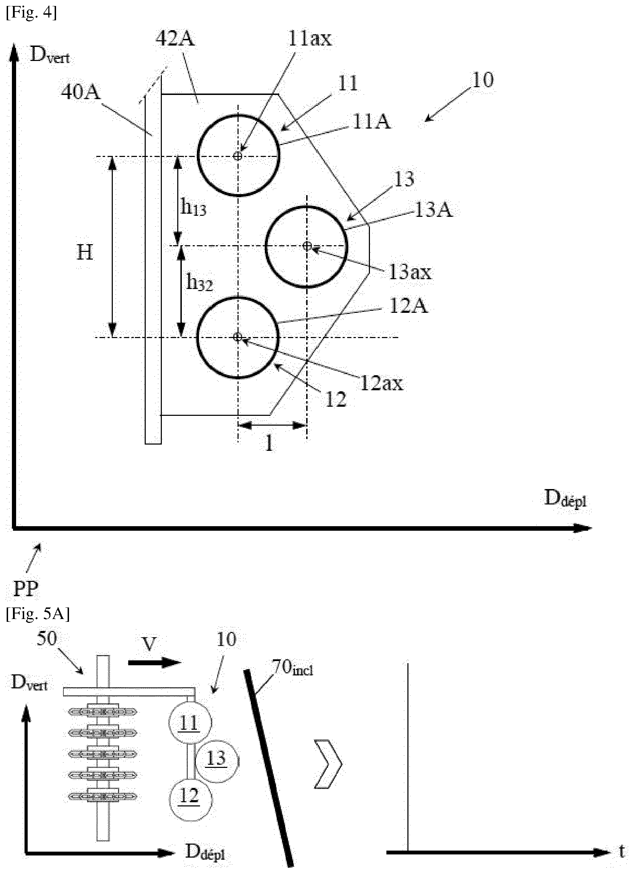

La figure 4 est une variation de la figure 3A et s'en distingue en ce qu'elle illustre le cas particulier choisi pour le présent mode de réalisation, dans lequel la longueur L est nulle et $h_{13} = h_{32} = H/2$, c'est-à-dire que le premier axe de détection 11ax est aligné selon une direction verticale $D_{vert}$ avec le deuxième axe de détection 12ax, et que le troisième axe de détection 13ax est positionné à mi-distance des premier et deuxième axes de détection selon la direction $D_{Vert}$.

Cette configuration permet une meilleure compacité du capteur 10 de piquet, facilitant les mouvements de la machine agricole notamment lors du changement de rang.

Sauf indication contraire, les explications ci-dessous s'appliquent à la géométrie illustrée par la [Fig.4].

En cours de traitement, les bobines émettrices et réceptrices des capteurs sont disposées de part et d'autre du rang de vigne de manière à l'encadrer et à distance l'une de l'autre de façon à laisser passer librement le rang de vigne entre elles lors du passage de la machine qui peut avancer dans le rang à des vitesses de l'ordre de 10 km/ h, comme illustré dans la [Fig.1].

En fonction des régions et des cépages, la largeur d'une vigne est maintenue dans des dimensions de l'ordre de 30 cm à 70 cm, feuillage compris.

Ces données associées à la vitesse de travail conduisent donc à avoir un écartement large entre les bobines pour s'affranchir d'écarts de conduite éventuels pouvant accrocher le dispositif dans la végétation et endommager la vigne, voire le dispositif lui-même.

Les capteurs utilisés sont, du fait de leur géométrie, sélectifs en direction, générant chacun des variations d'un signal de mesure lorsqu'ils passent au droit d'un objet métallique, c'est-à-dire lorsque l'objet métallique se trouve sensiblement dans le volume défini par les bobines d'émission et de détection du capteur considéré, une variation maximale du signal de mesure étant générée lorsque cet objet métallique traverse l'axe de détection du capteur.

Plus spécifiquement, l'unité 14 de gestion électronique des différents capteurs de métaux est configurée de manière à alimenter de façon cyclique et en alternance les bobines d'émission de chacun des capteurs de métaux 11, 12 et 13 afin de les charger puis de les décharger pour générer des courants de Foucault dans un piquet passant au droit de ces capteurs, ces courants atteignant leur maximum d'intensité lorsque le piquet traverse les axes de détection correspondants.

Le chargement d'une bobine d'émission consiste à lui appliquer une tension de façon à générer un champ magnétique mesurable sur la bobine de détection correspondante.

Le déchargement rapide de la bobine d'émission va induire une variation rapide du champ magnétique et générer alors des courants de Foucault dans un piquet métallique traversant ce champ magnétique, lesdits courants de Foucault dans le piquet générant à leur tour un champ magnétique qui sera détecté par la bobine de détection avec un niveau distinct du champ magnétique mesuré avant décharge de la bobine d'émission, ce niveau étant supérieur à un niveau de détection en l'absence de piquet, en passant par un maximum lorsque le piquet métallique passe sur l'axe de détection.

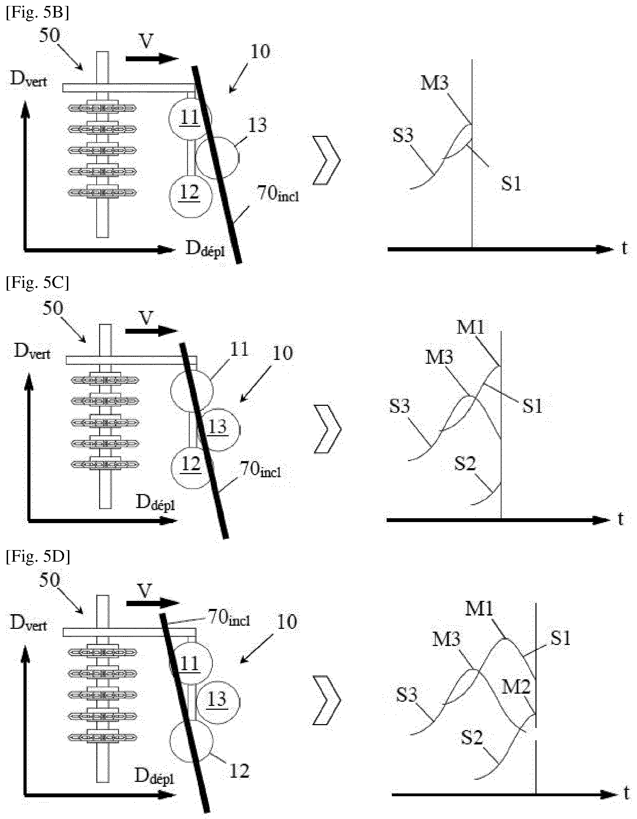

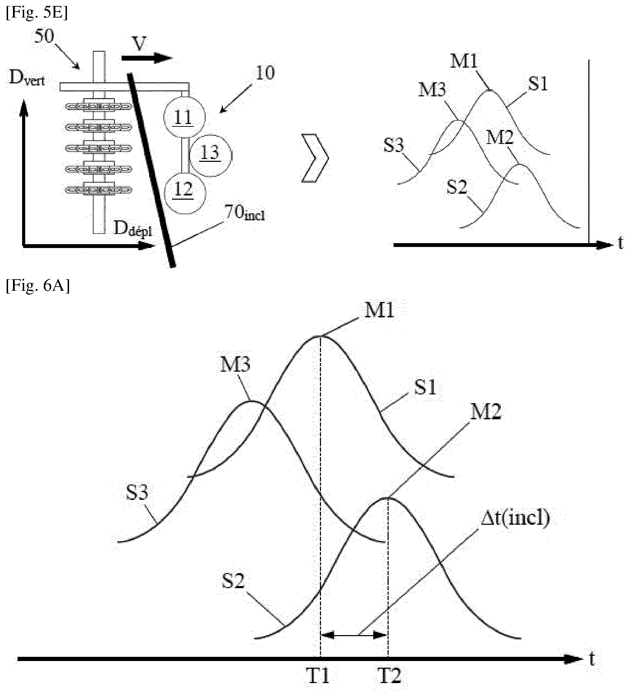

Les valeurs de ces niveaux sont représentées à des instants dépendant du placement des axes de détections des capteurs et du déplacement relatif du dispositif de détection et du piquet sur le schéma de la figure 5.

De façon à ne pas perturber les signaux issus des bobines réceptrices, les bobines émettrices sont alimentées en alternance et les signaux des bobines réceptrices sont mesurés de façon synchrone à l'alimentation des bobines émettrices par l'unité 14 de gestion électronique.

La fréquence d'alimentation de chaque bobine émettrice est suffisamment importante (de l'ordre de 1 kHz) de façon à détecter suffisamment tôt l'apparition d'un piquet métallique avant qu'il n'arrive au niveau de l'outil compte tenu de vitesses de déplacement de la machine agricole de l'ordre de 10 km/h.

Le piquet de largeur 30 mm traversera ainsi l'axe de détection d'un capteur pendant une durée de l'ordre du centième de seconde et fera donc l'objet d'une dizaine de mesures à cette fréquence pour chaque capteur.

Pour un capteur défini par un ensemble de bobines de diamètre 300 mm, le piquet traversera le volume défini par les bobines émettrices et réceptrices pendant une durée de l'ordre du dixième de seconde, faisant alors l'objet d'une centaine de mesure pour chaque capteur.

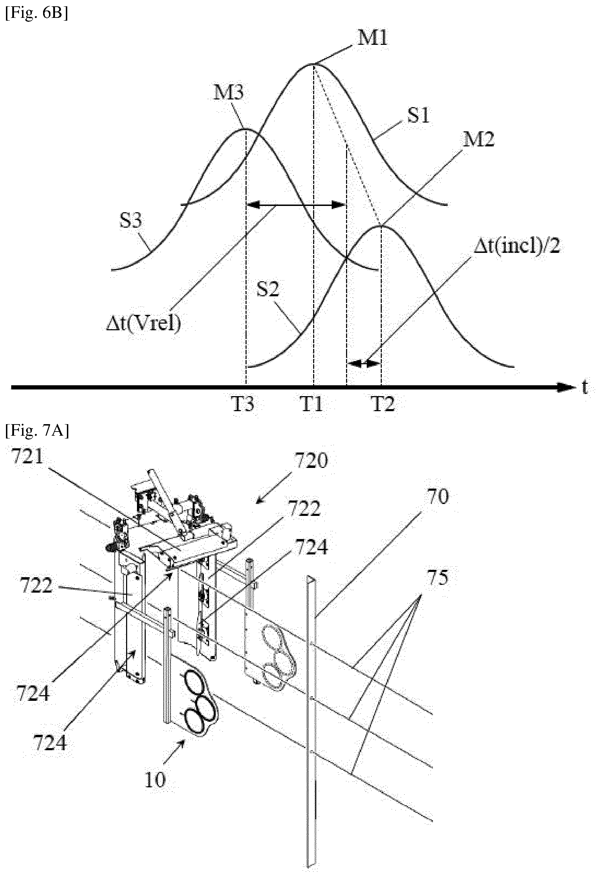

Les mesures conduisent aux formes de courbes présentées aux figures 5A à 5E, 6A et 6B.

Les figures 5A à 5E illustrent le principe de fonctionnement du dispositif de détection de piquets métalliques dans une haie végétale culturale palissée.

Les figures 5A à 5E représentent de façon schématique des instants successifs, dans l'ordre des figures, de la traversée d'un piquet métallique $70_{incl}$ incliné par rapport à la verticale $D_{vert}$ au travers d'un capteur 10 de piquet avec les premiers, deuxième et troisième capteurs de métaux 11, 12 et 13 selon une vue dans un plan parallèle au plan de palissage et dans une configuration telle que décrite à la [Fig.4].

Les schémas sur la gauche des figures 5A à 5E indiquent une position relative de l'organe de travail 50 et du capteur 10 de piquet vis-à-vis du piquet incliné $70_{incl}$, l'organe de travail et le dispositif de détection étant en déplacement à une vitesse V selon la direction de déplacement $D_{dépl}$.

La ligne verticale représente l'instant correspondant à la configuration schématisée à gauche des figures.

Les schémas sur la droite des figures 5A à 5E indiquent les variations dans le temps t des intensités de premier, deuxième et troisième signaux de mesure, respectivement notés S1, S2 et S3, générés respectivement par les bobines de réception 11B, 12B et 13B.

Sur la [Fig.5A], l'organe de travail 50 ainsi que le capteur 10 de piquet s'approchent du piquet incliné $70_{incl}$, le piquet étant encore trop éloigné pour que des variations significatives des signaux de détection soient repérées.

Sur la [Fig.5B], le piquet incliné est sensiblement sur l'axe de détection du troisième capteur de métaux 13, le plus en amont du capteur 10 de piquet, et le troisième signal de mesure S3 a atteint son niveau maximal M3 de variation ; au même instant, en raison du sens de son inclinaison, le piquet est entré dans la portée de détection du premier capteur de métaux 11 et induit déjà une variation croissante du premier signal de mesure S1, tandis que le piquet n'est pas encore entré dans la portée de détection du deuxième capteur de métaux 12, le deuxième signal de mesure S2 ne présente donc pas encore de variations.

Sur la [Fig.5C], le piquet incliné a dépassé l'axe de détection du troisième capteur de métaux mais reste dans sa portée de détection, le piquet incliné est sensiblement sur l'axe de détection du premier capteur, et est entré dans la portée de détection du deuxième capteur, de sorte que les variations du troisième signal de mesure S3 présentent maintenant une variation décroissante, le premier signal de mesure S1 a atteint son niveau maximal M1 de variation, et le deuxième signal de mesure S2 présente une variation croissante.

Sur la [Fig.5D], le piquet incliné sort de la portée de détection du troisième capteur, a dépassé l'axe de détection du premier capteur tout en restant dans sa portée de détection, et est sensiblement sur l'axe de détection du deuxième capteur, de sorte que les variations du troisième signal de mesure S3 sont à leur plus bas niveau, les variations du premier signal de mesure S1 présentent maintenant une variation décroissante, et le deuxième signal de mesure S2 a atteint son niveau maximal M2 de variation.

Sur la [Fig.5E], le piquet incliné est sorti des portées de détection de chacun des trois capteurs, les variations dans les trois signaux de mesure S1, S2 et S3 étant de nouveau non significatives.

Le piquet incliné arrive ici à proximité de l'organe de travail qui va être inactivé le temps nécessaire pour que le piquet traverse complètement l'organe de travail.

Le passage du capteur 10 de piquet au niveau d'un piquet métallique incliné $70_{incl}$ induit ainsi la génération de trois niveaux maximaux de détection M1, M2 et M3 décalés dans le temps des signaux de mesure des trois capteurs de métaux 11, 12 et 13, respectivement.

Les trois signaux représentés sur les figures 5A à 5E sont bien entendu idéalisés à des fins explicatives.

L'unité 14 de gestion électronique est configurée pour détecter de manière conventionnelle les niveaux maximaux M1, M2 et M3 des variations respectives des signaux de mesure S1, S2 et S3 illustrés sur les figures 5A à 5E et correspondant respectivement au passage du piquet au niveau de chaque axe de détection, assigner un instant de détection à ces niveaux maximaux de variation, instants respectivement notés T1, T2 et T3 correspondant à des détections respectives de présence du piquet métallique au moyen des trois capteurs 11, 12 et 13.

En pratique, les signaux émis par les bobines de détection pourront être influencés par d'autres éléments que les piquets métalliques, comme par exemple les fils 75 de palissage ou autres éléments métalliques tels que des éléments de fixation (crochets, clous...) situés dans le palissage.

Toutefois, les masses métalliques en jeu d'un fil de fer sont beaucoup plus faibles que celles d'un piquet et la distance séparant la bobine de réception de la bobine d'émission d'un capteur de métaux est importante, supérieure à la distance H entre deux bobines d'une même branche de portique, pour tenir compte de la largeur du matelas végétal de la haie palissée et de la vitesse d'avancement élevée du capteur 10 de piquet.

Ainsi, de faibles masses magnétiques telles que des fils traversant le capteur n'auront que peu d'effet sur le signal détecté au niveau de la bobine de réception, par rapport à une masse magnétique telle que celle d'un piquet.

Afin de minimiser l'influence de ces fils ou d'autres sources d'influences similaires, l'unité 14 de gestion électronique peut être configurée pour négliger toute variation des signaux S1, S2 et S3 ne dépassant pas un certain seuil prédéterminé, éventuellement réglable par l'utilisateur avant emploi du dispositif de détection, de manière à éviter de générer des signaux de détection non causés par un piquet métallique et donc à les considérer comme des artéfacts à négliger.

Les piquets d'une même haie palissée ont en effet des masses magnétiques identiques, discriminées aisément des autres masses magnétiques traversant potentiellement le dispositif de détection par un niveau de signal caractéristique.

Cela permet entre autres d'adapter le seuil d'inactivation de l'organe de travail au passage du piquet à la quantité de fer contenue dans le piquet.

Comme illustré sur la [Fig.3B], l'unité 14 de gestion électronique comprend une unité de calcul 14a, une unité d'entrée/sortie 14b de signaux, une horloge 14c, un voltmètre 14d et une mémoire informatique 14e.

Cette unité est configurée de manière à envoyer de façon cyclique les signaux d'émission Scom de façon successive à chaque bobine d'émission pour réceptionner les signaux de mesure S1, S2, S3 générés par les bobines de réception via l'unité d'entrée/sortie 14b, tout autant si nécessaire qu'un signal Sv communiqué par le tracteur et relatif à la vitesse d'avancement considérée par ce dernier.

Chaque signal issu de Scom comprend en effet la désignation de la bobine qui sera activée.

En cours d'opération, les amplitudes des signaux de mesure S1, S2 et S3 sont mesurées par le voltmètre 14d et enregistrées dans la mémoire informatique 14e à une fréquence d'échantillonnage correspondant à la fréquence d'alimentation, chaque mesure étant datée au moyen de l'horloge 14c.

Dans l'unité 14 de gestion électronique, la mémoire informatique 14e permet d'enregistrer les variations générées par les bobines de détection sur une période de temps donnée, à déterminer par le praticien en fonction de ses objectifs, mais suffisamment longue pour avoir simultanément en mémoire l'ensemble des événements liés au passage d'un piquet incliné, fonction de l'inclinaison maximale attendue et de la vitesse de déplacement prévue de la machine agricole.

En fonction des même critères, on peut définir la période de temps donnée comme suffisamment courte pour que les données enregistrées ne concernent que les événements de mesure liés à un piquet métallique unique.

L'unité de calcul 14a est configurée pour effectuer des calculs sur la base des données enregistrées dans la mémoire de manière à déterminer la présence d'un piquet métallique incliné, son sens d'inclinaison, l'amplitude de son inclinaison, et une vitesse relative $V_{rel}$ de déplacement du dispositif de détection par rapport au piquet métallique de la haie, comme expliqué ci-dessous à l'aide de la [Fig.6B].

Les figures 6A et 6B reprennent une représentation de l'enregistrement des signaux S1, S2 et S3 représentatifs du passage du dispositif de détection au niveau d'un piquet métallique incliné, comme illustré dans les figures 5A à 5E.

De manière basique, la détection d'un pic dans le signal de détection, par exemple un pic correspondant au niveau maximal M1 de variation détecté au moyen du premier capteur de métaux, est indicatif de la présence d'un piquet métallique dans la haie végétale palissée.

De manière plus élaborée, on peut mettre à profit les résultats des détections des trois détecteurs de métaux pour obtenir des informations plus détaillées concernant le piquet métallique détecté.

Un écart temporel $\Delta t(incl)$ entre les détections des niveaux maximaux M1 et M2 des variations des premier et deuxième signaux S1 et S2 aux instants T1 et T2 respectivement est illustré sur la [Fig.6A].

Dans le cas de la géométrie décrite par la figure 4, la simple existence d'un écart temporel $\Delta t(incl)$ significativement (en fonction des incertitudes de mesure liées à l'appareillage employé) non nul est indicative de la présence d'un piquet incliné, par opposition à la présence d'un piquet droit, c'est-à-dire s'étendant selon une direction verticale.

L'unité 14 de gestion électronique est conçue pour détecter un tel écart sensiblement non nul, la tolérance pouvant être choisie par l'utilisateur et, en réponse à cette détection, générer un signal $S_{incl}$ indicatif de l'état incliné d'un piquet métallique pour générer l'inactivation de l'organe de travail au passage du piquet.

Les opérations suivantes, applicables au cas d'un piquet incliné, ne seront mises en oeuvre qu'en cas de détection positive d'un piquet incliné.

L'écart temporel $\Delta t(incl)$ s'obtient par soustraction $\Delta t(incl) = T2 - T1$, de sorte que le signe du résultat $\Delta t(incl)$ renseigne sur le sens d'inclinaison du piquet : dans le cas illustré, le premier capteur étant situé plus haut que le deuxième capteur et le résultat de la soustraction $T2 - T1$ étant positif puisque le piquet incliné est passé au niveau du deuxième capteur après être passé au niveau du premier capteur, on peut déduire que le piquet est incliné, de bas en haut, vers les capteurs du dispositif de détection et l'organe de travail ou encore vers l'amont par rapport à la direction de déplacement $D_{dépl}$.

A l'inverse, si le résultat de la soustraction $T2 - T1$ était négatif, on en déduirait que le piquet est incliné, de bas en haut, à l'opposé des capteurs du dispositif de détection et l'organe de travail, c'est-à-dire vers l'aval par rapport à la direction de déplacement $D_{dépl}$.

Ainsi, l'unité 14 de gestion électronique est conçue de manière à générer un signal $S_{sens}$ représentatif du sens d'inclinaison d'un piquet métallique incliné dans le plan de palissage par rapport à une direction verticale, sur la base d'un ordre chronologique de réception desdits premier et deuxième niveaux maximaux de variation par l'unité de gestion électronique

En utilisant en outre les caractéristiques géométriques L et H des placements des capteurs 11 et 12, associées à un signal $S_V$ représentatif d'une vitesse V de déplacement de la machine agricole 20 et émis par celle-ci, l'unité 14 de gestion électronique est en outre capable de générer un signal $S_\alpha$ représentatif d'une amplitude d'inclinaison $\alpha$ du piquet métallique de la haie sur la base de la formule

$$\alpha = \arctan\left(\frac{V^* \Delta t(incl) - L}{H}\right)$$
, $V^* \Delta t(incl)$

représentant la distance parcourue par la machine agricole se déplaçant à la vitesse V dans la direction de déplacement D $_{dépl}$ entre les générations des premiers et deuxièmes niveaux maximaux de détection M1 et M2.

Dans le cas spécifique de la géométrie de la figure 4, qui est le cas du présent mode de réalisation, la formule se simplifie en

$$\alpha = \arctan\left(\frac{V^* \Delta t(incl)}{H}\right).$$

La figure 6B illustre un écart temporel $\Delta t(V_{rel})$ entre, d'une part, le niveau maximal M3 des variations du troisième signal à l'instant T3 et, d'autre part, un instant situé à mi-chemin entre les instants T1 et T2, instant déterminé par une position verticale à mi-distance de l'axe de détection du capteur 13 par rapport aux axes de détection des capteurs 11 et 12.

Cet écart temporel $\Delta t(V_{rel})$, calculé au moyen de l'unité 14 de gestion électronique, permet d'affiner et/ou de confirmer la vitesse relative $V_{rel}$ de déplacement entre le dispositif de détection et le piquet métallique par

$$V_{rel} = \frac{l}{\Delta t(V_{rel})}$$

application de la formule où la distance $l$ et l'intervalle de temps $\Delta t(V_{rel})$ sont illustrés par les figures 3A et 6B, respectivement.

En effet, la vitesse V utilisée dans la formule

$$\alpha = \arctan\left(\frac{V^* \Delta t(incl) - L}{H}\right)$$
provient, par exemple, d'un signal Sv qui est représentatif de cette vitesse et généré et transmis à l'unité 14 par la machine agricole, par exemple au moyen d'un compteur de vitesse.

Or, ce compteur de vitesse n'est pas forcément exempt de dérive, sa calibration initiale peut être insuffisamment précise pour le pilotage souhaité de l'organe de travail, ou bien un phénomène de patinage de roues de la machine agricole peut entraîner un écart entre l'indication du compteur de vitesse et la vitesse de déplacement effective de la machine agricole.

Ainsi, l'unité 14 de gestion électronique est capable de générer un signal $S_{Vrel}$ représentatif d'une vitesse relative $V_{rel}$ de déplacement plus précise entre le dispositif de détection et le piquet métallique, et est également capable d'avantageusement remplacer V par $V_{rel}$ dans les calculs effectuées par l'unité 14 de gestion électronique, par exemple en remplaçant l'amplitude d'inclinaison $\alpha$ par une amplitude d'inclinaison

$$\alpha' = \arctan\left(\frac{V_{rel}^* \Delta t(incl) - L}{H}\right)$$
, ou

$$\alpha' = \arctan\left(\frac{V_{rel}^* \Delta t(incl)}{H}\right)$$
dans le cas de la [Fig.4].

On peut tenir compte des informations déduites des mesures issues des capteurs 11, 12 et 13 comme expliqué ci-dessus pour, en plus de la détection d'un piquet métallique incliné, déterminer son sens d'inclinaison, l'amplitude de son inclinaison, et sa vitesse relative $V_{rel}$ de déplacement par rapport au dispositif de détection.

Afin de piloter l'organe de travail, l'unité de calcul 14a de l'unité 14 de gestion électronique génère un signal $S_{com}$ à destination de l'organe de travail sur la base d'un ou plusieurs des signaux $S_{incl}$, $S_{sens}$, $S_\alpha$ et $S_{Vrel}$, permet de commander l'organe de travail de la machine agricole de manière à lui permettre d'éviter le piquet métallique de manière adéquate en fonction d'une part des informations dont ces signaux sont respectivement représentatifs, et d'autre part de paramètres déterminés par l'utilisateur.

En effet, sur la base de ces informations, couplées à un encombrement tridimensionnel et un positionnement de l'organe de travail relativement au dispositif de détection de piquets entrées préalablement dans la mémoire informatique 14e par l'utilisateur sous forme de données Info$_W$, l'unité de calcul 14a pourra calculer précisément les instants de passage idéaux d'un état actif de l'organe de travail à un état neutralisé, puis un retour de l'état neutralisé à l'état actif pour une marge de sécurité donnée.

L'état actif est un état dans lequel l'organe de travail traite effectivement la haie alors que l'état neutralisé est l'état dans lequel l'organe de travail ne traite pas effectivement, ou moins efficacement la haie, soit parce que des éléments de coupe le composant ont été éloignés de la haie soit parce qu'une force mécanique qu'il applique à la haie, par exemple lors d'une opération de secouage en vue d'une récolte de fruits, a été réduite.

Suite à leurs générations, les signaux $S_{incl}$, $S_{sens}$, $S_\alpha$ et $S_{Vrel}$ peuvent être enregistrés dans la mémoire informatique 14e, ou dans une mémoire interne de l'unité de calcul 14a, pour réemploi par l'unité de calcul 14a lors de la génération du signal $S_{com}$ de commande de l'organe de travail.

Le présent mode de réalisation, illustré par la [Fig.1], concerne en particulier une opération de prétaillage d'une vigne palissée, l'organe de travail 50 étant constitué d'une paire 52 de têtes de coupe à lames rotatives encadrant la haie, les têtes de coupe étant en cours d'utilisation orientées horizontalement et situées de part et d'autre de la haie.

Ici, en mode actif, les têtes de coupe sont suffisamment rapprochées du plan de palissage pour que les lames rotatives traversent ce plan de palissage.

Un dépassement de piquet métallique avec les têtes de coupe en mode actif se solderait par des dégâts immédiats aux lames rotatives et/ou au piquet métallique.

Un mode neutralisé est ainsi défini, correspondant à un éloignement des têtes de coupe du plan de palissage, de manière à éviter un contact des lames avec le piquet métallique.

En cours de traitement d'une vigne palissée, en réponse à un signal de l'unité 14 de gestion électronique représentatif des informations collectées au moyen des capteurs de métaux 11, 12 et 13, on peut commander les têtes de coupe en optimisant :

i. l'instant de leur passage du mode actif au mode neutralisé à l'approche d'un piquet métallique et

ii. l'instant de leur retour au mode actif de manière à réduire au maximum la durée en mode neutralisé.

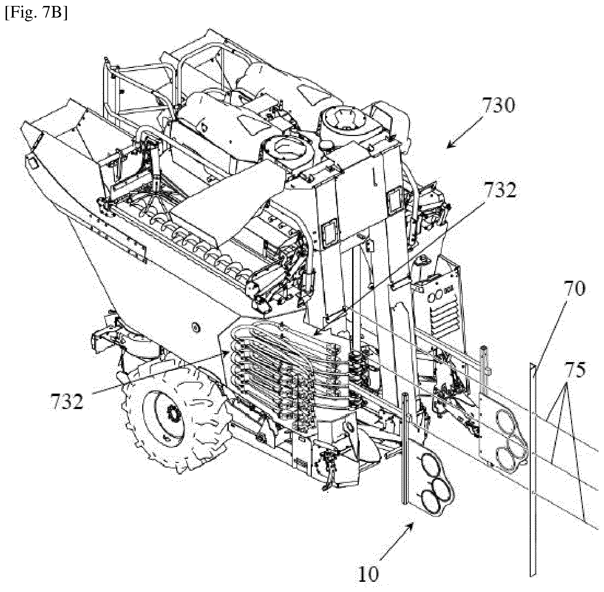

Les figures 7A et 7B illustrent de façon schématique l'application du dispositif de détection à deux autres exemples d'organes de travail dans une vigne palissée, seuls les organes de travail et le palissage étant représentés, par souci de clarté des figures.

L'organe de travail 720 de la [Fig.7A] est destiné à une opération d'écimage d'une vigne en cours de végétation dans laquelle il faut écimer latéralement et horizontalement les extrémités des nouveaux sarments pour favoriser la croissance des baies de raisin.

L'organe de travail comporte ainsi deux barres de coupe latérales 722 orientées généralement verticalement en cours d'usage et munies dans l'exemple illustré de couteaux rotatifs 724, mais pouvant aussi être remplacées par des barres de coupe alternatives.

Elle comporte aussi une barre de coupe horizontale 721 orientée généralement horizontalement en cours d'usage et qui traverse de fait le plan de palissage pour écimer l'extrémité supérieure d'une haie végétale culturale palissée et ne doit pas rentrer en collision avec les piquets 70.

Le mode neutralisé d'une telle barre de coupe 721 correspond, en cours d'utilisation, à relever la tête de coupe à une hauteur supérieure à celle du piquet métallique.

L'organe de travail 730 de la [Fig.7B] est une tête de récolte destinée à une opération de récolte d'une vigne.

A cet effet, l'organe de travail 730 comporte deux ensembles 732 de détachement des baies enserrant et secouant la vigne dans une direction horizontale perpendiculaire au plan de palissage afin de faire tomber les baies.

Le mode neutralisé d'une telle tête de récolte de fruits est de réduire l'intensité d'une force de secouage mécanique appliquée à la haie végétale culturale palissée.

Le secouage est ainsi largement désactivé au passage du piquet 70 qui ne subit alors que de légères oscillations au passage des ensembles de détachement des baies.

D'autres exemples d'utilisation du dispositif de détection selon l'invention sont bien entendu possibles en accord avec la description ci-dessus.

De même, d'autres modes de désactivation peuvent être aisément envisagés dès lors que le système de détection permet d'anticiper l'arrivée d'un piquet dans l'organe de travail.

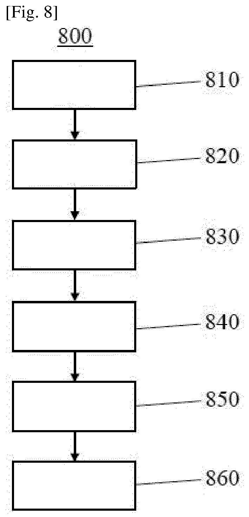

Comme illustré par la [Fig.8], un procédé d'évitement 800 de piquets métalliques d'une haie végétale culturale palissée pour une machine agricole mobile comprend une entrée 810 des caractéristiques d'un organe de travail (positionnement par rapport au dispositif de détection, encombrement), un déplacement 820 de la machine agricole mobile parallèlement à un plan de palissage de la haie concomitant à un traitement 830 de la haie végétale culturale palissée avec l'organe de travail, une détection 840 d'un piquet métallique incliné au moyen du dispositif de détection de piquets métalliques dans une haie végétale culturale palissée selon l'invention, un éloignement temporaire 860 de l'organe de travail par rapport au plan de palissage en réponse à la réception 850 par l'organe de travail d'un signal de commande délivré par l'unité 14 de gestion électronique en réponse à la détection d'un piquet incliné.

Le signal d'inclinaison peut être généré par l'unité 14 de gestion électronique de manière à être représentatif de, outre une information de présence d'un piquet métallique incliné, du sens d'inclinaison du piquet, de son amplitude d'inclinaison, et/ou de la vitesse relative $V_{rel}$ de manière à piloter plus finement le passage de l'état actif à l'état neutralisé, et inversement, de l'organe de travail.

Plus spécifiquement, en fonction des informations contenues dans le signal d'inclinaison, on peut contrôler, éventuellement en combinaison avec la vitesse de déplacement V, un retard à partir de la délivrance du signal de détection devant être appliqué à l'éloignement temporaire de l'organe de travail vis-à-vis du plan de palissage, le retard étant fonction d'une vitesse de déplacement de la machine agricole, représentée par V ou $V_{rel}$, et d'au moins l'une parmi une information de sens d'inclinaison du piquet et une amplitude d'inclinaison du piquet.

**Revendications**

1. Dispositif (15) de détection de piquet métallique dans une haie (60) végétale culturale palissée, comprenant au moins un capteur (10) de piquet métallique conçu pour être déplacé parallèlement à un plan de palissage (PP) de la haie et agencé pour générer un signal de détection lorsqu'il passe au droit d'un piquet métallique (70) de la haie comprenant des piquets métalliques, le dispositif de détection étant **caractérisé en ce que** ledit capteur de piquet métallique comporte un premier et un deuxième capteur de métaux (11, 12) agencés pour générer respectivement un premier et un deuxième signal (S1, S2) de mesure lorsqu'ils passent au droit d'un des piquets métalliques (70) de la haie, lesdits premier et deuxième capteurs de métaux étant mécaniquement solidaires en déplacement l'un de l'autre et agencés pour être espacés verticalement l'un par rapport à l'autre lors d'une utilisation dudit dispositif, le dispositif de détection (15) comportant en outre une unité (14) de gestion électronique desdits premier et deuxième signaux de détection, configurée pour recevoir le premier signal (S1) de mesure et le deuxième signal (S2) de mesure et pour, sur détection d'un écart temporel ( $\Delta$ *t(incl))* entre des niveaux maximaux de variation (M1, M2) des premier et deuxième signaux de mesure, générer un signal (S$_{incl}$ ) indicatif d'un état incliné du piquet métallique par rapport à une direction verticale (D$_{vert}$) dans le plan de palissage (PP).

2. Dispositif (15) de détection selon la revendication 1, dans lequel l'une unité (14) de gestion électronique est configurée pour générer un signal (S$_{sens}$) représentatif d'un sens d'inclinaison du piquet métallique incliné sur la base d'un ordre chronologique entre des niveaux maximaux de variation (M1, M2) des premier et deuxième signaux de mesure.

3. Dispositif (15) de détection selon la revendication 1 ou 2, dans lequel le premier et le deuxième capteur de métaux (11, 12) comprennent chacun une bobine d'émission (11A, 12A) et une bobine de réception (11B, 12B) définissant un axe de détection (11ax, 12ax) sur lequel un signal de détection de piquet métallique généré par la bobine de détection en réponse à un signal issu de la bobine de réception est maximum lorsque le capteur correspondant passe au droit du piquet métallique, et dans lequel le premier et le deuxième signal de mesure (S1, S2) sont générés par la bobine de détection du premier et du deuxième capteur (11, 12), respectivement.

4. Dispositif (15) de détection selon la revendication 3, comprenant un portique (30) de détection mobile le long du plan de palissage (PP), ledit portique de détection comprenant une première et une deuxième branche (40A, 40B) de portique conçues pour, en cours d'usage, se faire face et se déplacer parallèlement au plan de palissage, la première branche (40A) de portique comportant l'une de la bobine d'émission (11A, 12A) et de la bobine de réception (11B, 12B) du premier et du deuxième capteur de métaux (11, 12), la deuxième branche (40B) de portique comprenant l'autre de la bobine d'émission (11A, 12A) et de la bobine de réception (11B, 12B) du premier et du deuxième capteur de métaux (11, 12), les bobines étant montées sur les branches de portiques de manière telle que, en cours d'usage, les axes de détection (11ax, 12ax) des capteurs de métaux (11, 12) soient espacés verticalement l'un de l'autre.

5. Dispositif (15) de détection selon la revendication 4, dans lequel la première branche (40A) de portique et la deuxième branche (40B) de portique sont conçues pour, en cours d'usage, encadrer le plan de palissage (PP).

6. Dispositif (15) de détection selon la revendication 4 ou 5, dans lequel l'unité de gestion électronique est en outre configurée de manière à :

- recevoir un signal (S$_V$) représentatif d'une vitesse de déplacement (V) d'une machine agricole, généré et envoyé par la machine agricole destinée à déplacer le dispositif (10) de détection ;
- mesurer un intervalle de temps ( $\Delta$ *t(incl))* séparant des niveaux maximaux de variation (M1, M2) des premier et deuxième signaux de détection (S1, S2) ; et
- générer un signal (S$_\alpha$) représentatif d'une amplitude d'inclinaison du piquet métallique de la haie sur la base du signal (S$_V$) représentatif de la vitesse de déplacement (V) de la machine agricole, de l'intervalle de temps ( $\Delta$ *t(incl))* et d'un espacement vertical (H) entre les axes de détection respectifs du premier et du deuxième capteur de métaux (11, 12).

7. Dispositif (15) de détection selon la revendication 6, dans lequel l'unité de gestion électronique est configurée pour générer le signal (S$_\alpha$) représentatif d'une amplitude d'inclinaison $\alpha$ du piquet métallique de la haie en employant la formule

$$\alpha = \arctan \left( \frac{V * \Delta \, t(incl) - L}{H} \right) \text{ où } V$$

est une variable représentative d'une vitesse de déplacement d'une machine agricole telle qu'indiquée par la machine agricole elle-même, et ou L représente un espacement horizontal entre les axes de détection respectifs du premier et du deuxième capteur de métaux.

8. Dispositif (15) de détection de piquets métalliques selon l'une quelconque des revendications précédentes, le capteur de piquet métallique comprenant en outre un troisième capteur de métaux (13) agencé pour générer un troisième signal de mesure (S3) lorsqu'il passe au droit du piquet métallique de la haie, le troisième capteur de métaux étant mécaniquement solidaire en déplacement du premier et du deuxième capteurs de métaux (11, 12) et espacé horizontalement du premier capteur de métaux (11), dans lequel l'unité (14) de gestion électronique est en outre configurée pour recevoir le troisième signal de détection, et, sur la base d'instants de réceptions respectifs (T1, T2, T3) de niveaux maximaux de variation (M1, M2, M3) des premier, deuxième et troisième signaux de détection (S1, S2, S3), délivrer un signal (S$_{Vrev}$) représentatif d'une information de vitesse relative (V$_{rel}$) de déplacement du dispositif de détection par rapport au piquet métallique de la haie.

9. Dispositif (15) de détection selon la revendication 7 et la revendication 8, dans lequel l'unité de gestion électronique est configurée pour générer le signal (S$_\alpha$) représentatif d'une amplitude d'inclinaison α' du piquet métallique de la haie en employant la formule

$$\alpha' = \arctan\left(\frac{V_{rel} * \Delta\, t(incl) - L}{H}\right) \text{ où}$$

V$_{rel}$ est une variable représentative d'une vitesse relative de déplacement entre le dispositif de détection et le piquet métallique telle que déterminée sur la base de signaux de mesure du dispositif de détection , et où L représente un espacement horizontal entre les axes de détection respectifs (11ax, 12ax) du premier et du deuxième capteur de métaux (11, 12).

10. Dispositif (15) de détection de piquets métalliques selon la revendication 8 et la revendication 4, le troisième capteur de métaux (13) comprenant une bobine d'émission (13A) et une bobine de réception (13B) définissant un axe de détection (13ax), l'une de la bobine d'émission et de la bobine de réception étant montée sur la première branche (40A) de portique et l'autre de la bobine d'émission et de la bobine de réception étant montée sur la deuxième branche (40B) de portique, l'axe de détection du troisième capteur de métaux étant, en cours d'usage du dispositif de détection, espacé horizontalement de l'axe du premier capteur de métaux.

11. Dispositif (15) de détection selon l'une quelconque des revendications précédentes, dans lequel les capteurs de métaux (11, 12) font partie de détecteurs magnétiques à induction pulsée (11, 12, 13, 14, 15).

12. Machine agricole (20) mobile de traitement de cultures sous forme de haies végétales culturales palissées, comprenant un organe de travail (50) et un dispositif (15) de détection de piquet métallique selon l'une quelconque des revendications précédentes monté en amont de l'organe de travail par rapport à un sens de déplacement (D$_{dépl}$) de la machine agricole au cours d'un traitement de haies végétales culturales palissées.

13. Machine agricole (20) selon la revendication 12, l'organe de travail (50) présentant au moins un état actif et au moins un état neutralisé, l'organe de travail étant conçu de manière à être piloté par l'unité de gestion électronique de manière à provoquer un passage temporaire de l'état actif à l'état neutralisé puis un retour à l'état actif en réponse à la génération du signal (S$_{incl}$) indicatif d'un état incliné du piquet métallique.

14. Machine agricole (20) selon l'une quelconque des revendications 12 et 13, dans laquelle l'organe de travail comprend au moins un ensemble parmi :

   - une paire (52) de têtes de coupe à lames rotatives, les lames rotatives étant destinées à être, en cours d'utilisation, orientées horizontalement, situées de part et d'autre de d'une haie végétale culturale palissée et traversant le plan de palissage dans leur état actif ;
   - deux barres de coupe latérales (722) destinées à être, en cours d'utilisation, orientée sensiblement verticalement et une barre de coupe horizontale (721) destinée à être, en cours d'utilisation, orientée sensiblement horizontalement et conçue pour traverser le plan de palissage de manière à écimer l'extrémité supérieure d'une haie végétale culturale palissée ; et
   - deux ensembles 732 de détachement de baies destinés à secouer la haie végétale culturale palissée de manière à récolter des baies issues de cette haie végétale culturale palissée.

15. Procédé d'évitement (800) de piquets métalliques d'une haie végétale culturale palissée pour une machine agricole mobile selon l'une quelconque des revendications 12 à 14, comprenant :

   - un déplacement (820) de la machine agricole mobile parallèlement à un plan de palissage de la haie ;
   - un traitement (830) de la haie végétale culturale palissée avec l'organe de travail ; et
   - un éloignement temporaire (860) de l'organe de travail par rapport au plan de palissage en réponse à la réception par l'organe de travail du signal (S$_{com}$) de commande délivré par l'unité de gestion électronique.

16. Procédé d'évitement (800) de piquets métalliques selon la revendication 15, dans lequel l'éloignement temporaire de l'organe de travail est opéré avec un retard par rapport à la génération du signal de détection d'un piquet métallique incliné, le retard étant fonction d'une vitesse de déplacement (V, V$_{rel}$) de la machine agricole et d'au moins l'une parmi une information de sens d'inclinaison du piquet et une amplitude d'inclinaison du piquet.

**Patentansprüche**

1. Vorrichtung (15) zum Erkennen eines Metallpfahls in einer Spalierkulturpflanzenhecke (60), umfassend mindestens einen Metallpfahl-Sensor (10), der gestaltet ist, um parallel zu einer Spalierebene (PP) der Hecke bewegt zu werden, und angeordnet, um ein Erkennungssignal zu erzeugen, wenn er auf Höhe eines Metallpfahls (70) der Hecke gelangt, die Metallpfähle umfasst, wobei die Vorrichtung zum Erkennen **dadurch gekennzeichnet ist, dass** der Metallpfahl-Sensor einen ersten und einen zweiten Metallsensor (11, 12) beinhaltet, die angeordnet sind, um jeweils ein erstes und ein zweites Messsignal (S1, S2) zu erzeugen, wenn sie auf Höhe eines Metallpfahls (70) der Hecke gelangen, wobei der erste und zweite Metallsensor mechanisch zur Fortbewegung fest miteinander verbunden sind, und angeordnet sind, um bei einer Verwendung der Vorrichtung vertikal voneinander beabstandet zu sein, wobei die Vorrichtung zum Erkennen (15) weiter eine elektronische Verwaltungseinheit (14) der ersten und zweiten Erkennungssignale beinhaltet, die konfiguriert ist, um das erste Messsignal (S1) und das zweite Messsignal (S2) zu empfangen, und um bei Erkennen einer Zeitabweichung ($\Delta t(incl)$) zwischen den maximalen Änderungsstufen (M1, M2) der ersten und zweiten Messsignale ein Signal ($S_{incl}$) zu erzeugen, das auf einen geneigten Zustand des Metallpfahls in Bezug auf eine vertikale Richtung ($D_{vert}$) in der Spalierebene (PP) hinweist.

2. Vorrichtung (15) zum Erkennen nach Anspruch 1, wobei die eine elektronische Verwaltungseinheit (14) konfiguriert ist, um ein Signal ($S_{sens}$), das repräsentativ für eine Neigungsrichtung des geneigten Metallpfahls ist, auf Basis einer chronologischen Reihenfolge zwischen den maximalen Änderungsstufen (M1, M2) der ersten und zweiten Messsignale zu erzeugen.

3. Vorrichtung (15) zum Erkennen nach Anspruch 1 oder 2, wobei der erste und der zweite Metallsensor (11, 12) jeweils eine Sendespule (11A, 12A) und eine Empfangsspule (11B, 12B) umfassen, die eine Erkennungsachse (11ax, 12ax) definieren, auf der ein Erkennungssignal eines Metallpfahls, das von der Erkennungsspule als Reaktion auf ein Signal erzeugt wird, das aus der Empfangsspule stammt, maximal ist, wenn der entsprechende Sensor auf Höhe eines Metallpfahls gelangt, und wobei das erste und zweite Messsignal (S1, S2) jeweils durch die Erkennungsspule des ersten und zweiten Sensors (11, 12) erzeugt werden.

4. Vorrichtung (15) zum Erkennen nach Anspruch 3, umfassend ein Erkennungsportal (30), das entlang der Spalierebene (PP) beweglich ist, wobei das Erkennungsportal einen ersten und einen zweiten Portalschenkel (40A, 40B) umfasst, die gestaltet sind, um einander im Laufe der Nutzung zugewandt zu sein, und sich parallel zur Spalierebene zu bewegen, wobei der erste Portalschenkel (40A) die eine von der Sendespule (11A, 12A) und der Empfangsspule (11B, 12B) des ersten und des zweiten Metallsensors (11, 12) beinhaltet, der zweite Portalschenkel (40B) die andere von der Sendespule (11A, 12A) und der Empfangsspule (11B, 12B) des ersten und des zweiten Metallsensors (11, 12) umfasst, wobei die Spulen an den Portalschenkeln montiert sind, sodass die Erkennungsachsen (11ax, 12ax) der Metallsensoren (11, 12) im Laufe der Nutzung vertikal voneinander beabstandet sind.

5. Vorrichtung (15) zum Erkennen nach Anspruch 4, wobei der erste Portalschenkel (40A) und der zweite Portalschenkel (40B) gestaltet sind, um im Laufe der Nutzung die Spalierebene (PP) einzurahmen.

6. Vorrichtung (15) zum Erkennen nach Anspruch 4 oder 5, wobei die elektronische Verwaltungseinheit weiter konfiguriert ist, um:

   - ein Signal ($S_v$) zu empfangen, das repräsentativ für die Fortbewegungsgeschwindigkeit (V) einer landwirtschaftlichen Maschine ist, das von der landwirtschaftlichen Maschine erzeugt und verschickt wird, die dazu bestimmt ist, die Vorrichtung (10) zum Erkennen fortzubewegen;
   - ein Zeitintervall ($\Delta t(incl)$) zu messen, das maximale Änderungsstufen (M1, M2) der ersten und zweiten Erkennungssignale (S1, S2) trennt; und
   - ein Signal ($S_\alpha$), das repräsentativ für eine Neigungsamplitude des Metallpfahls der Hecke ist, auf der Basis des Signals ($S_v$), das repräsentativ für die Fortbewegungsgeschwindigkeit (V) der landwirtschaftlichen Maschine ist, aus dem Zeitintervall ($\Delta t(incl)$) und einem vertikalen Abstand (H) zwischen den jeweiligen Erkennungsachsen des ersten und zweiten Metallsensors (11, 12) zu erzeugen.

7. Vorrichtung (15) zum Erkennen nach Anspruch 6, wobei die elektronische Verwaltungseinheit konfiguriert ist, um das Signal ($S_\alpha$), das repräsentativ für eine Neigungsamplitude $\alpha$ des Metallpfahls der Hecke ist, durch Verwenden der Formel

$$\alpha = \arctan\left(\frac{V * \Delta t(incl) - L}{H}\right)$$

zu erzeugen, wobei V eine Variable repräsentativ für eine Fortbewegungsgeschwindigkeit einer landwirtschaftlichen Maschine, wie durch die landwirtschaftliche Maschine selbst angegeben, ist, und wobei L einen horizontalen Abstand zwischen den jeweiligen Erkennungsachsen des ersten und zweiten Metallsensors darstellt.

8. Vorrichtung (15) zum Erkennen von Metallpfählen nach einem der vorstehenden Ansprüche, wobei der Metallpfahl-Sensor weiter einen dritten Metallsensor (13) umfasst, der angeordnet ist, um ein drittes Messsignal (S3) zu erzeugen, wenn er auf Höhe des Metallpfahls der Hecke gelangt, wobei der dritte Metallsensor mechanisch zur Fortbewegung fest mit dem ersten und zweiten Metallsensor (11, 12) verbunden und horizontal vom ersten Metallsensor (11) beabstandet ist, wobei die elektronische Verwaltungseinheit (14) weiter konfiguriert ist, um das dritte Erkennungssignal zu empfangen, und auf Basis jeweiliger Empfangszeitpunkte (T1, T2, T3) von maximalen Änderungsstufen (M1, M2, M3) der ersten, zweiten und dritten Erkennungssignale (S1, S2, S3) ein Signal ($S_{Vrev}$) abzugeben, das repräsentativ für eine relative Fortbewegungsgeschwindigkeit ($V_{rel}$) der Vorrichtung zum Erkennen in Bezug auf den Metallpfahl der Hecke ist.

9. Vorrichtung (15) zum Erkennen nach Anspruch 7, und Anspruch 8, wobei die elektronische Verwaltungseinheit konfiguriert ist, um ein Signal ($S_\alpha$), das repräsentativ für eine Neigungsamplitude α' des Metallpfahls der Hecke ist, durch Verwenden der Formel $\alpha' = \arctan\left(\frac{V_{rel}* \Delta t(incl)-L}{H}\right)$ zu erzeugen, wobei $V_{rel}$ eine Variable repräsentativ für eine relative Fortbewegungsgeschwindigkeit zwischen der Vorrichtung zum Erkennen und dem Metallpfahl, wie auf der Basis der Messsignale der Vorrichtung zum Erkennen bestimmt, ist, und wobei L einen horizontalen Abstand zwischen den jeweiligen Erkennungsachsen (11ax, 12ax) des ersten und zweiten Metallsensors (11, 12) darstellt.

10. Vorrichtung (15) zum Erkennen von Metallpfählen nach Anspruch 8 und Anspruch 4, wobei der dritte Metallsensor (13) eine Sendespule (13A) und eine Empfangsspule (13B) umfasst, die eine Erkennungsachse (13ax) definieren, wobei die eine von der Sendespule und der Empfangsspule auf dem ersten Portalschenkel (40A) montiert ist, und die andere von der Sendespule und der Empfangsspule auf dem zweiten Portalschenkel (40B) montiert ist, wobei die Erkennungsachse des dritten Metallsensors im Laufe der Nutzung der Vorrichtung zum Erkennen horizontal von der Achse des ersten Metallsensors beabstandet ist.

11. Vorrichtung (15) zum Erkennen nach einem der vorstehenden Ansprüche, wobei die Metallsensoren (11, 12) zu Pulsinduktionsmagnetsensoren (11, 12, 13, 14, 15) gehören.

12. Bewegliche landwirtschaftliche Maschine (20) zur Behandlung von Kulturen in Form von Spalierkulturpflanzenhecken, umfassend ein Arbeitsorgan (50) und eine Vorrichtung (15) zum Erkennen eines Metallpfahls nach einem der vorstehenden Ansprüche, die stromaufwärts des Arbeitsorgans in Bezug auf eine Fortbewegungsrichtung ($D_{depl}$) der landwirtschaftlichen Maschine im Laufe einer Behandlung von Spalierkulturpflanzenhecken montiert ist.

13. Landwirtschaftliche Maschine (20) nach Anspruch 12, wobei das Arbeitsorgan (50) mindestens einen aktiven Zustand und mindestens einen neutralisierten Zustand aufweist, wobei das Arbeitsorgan gestaltet ist, um von einer elektronischen Verwaltungseinheit gesteuert zu werden, um einen vorübergehenden Übergang vom aktiven Zustand in den neutralisierten Zustand, gefolgt von einer Rückkehr in den aktiven Zustand als Reaktion auf das Erzeugen des Signals ($S_{incl}$) hervorzurufen, das auf einen geneigten Zustand des Metallpfahls hinweist.

14. Landwirtschaftliche Maschine (20) nach einem der Ansprüche 12 und 13, wobei das Arbeitsorgan mindestens eine Einheit umfasst aus:

    - einem Paar (52) an Schneidköpfen mit Drehmessern, wobei die Drehmesser dazu bestimmt sind, um im Laufe der Nutzung horizontal ausgerichtet zu sein, um sich beiderseits einer Spalierkulturpflanzenhecke zu befinden, und in ihrem aktiven Zustand die Spalierebene zu queren;
    - zwei seitliche Messerbalken (722), die dazu bestimmt sind, um im Laufe der Nutzung im Wesentlichen vertikal ausgerichtet zu sein, und einen horizontalen Messerbalken (721), der dazu bestimmt ist, um im Laufe der Nutzung im Wesentlichen horizontal ausgerichtet zu sein, um die Spalierebene zu durchqueren um das obere Ende einer Spalierkulturpflanzenhecke zu stutzen; und
    - zwei Beerenlöseeinheiten 732, die dazu bestimmt sind, um die Spalierkulturpflanzenhecke im Laufe der Nutzung zu schütteln um Beeren aus dieser Spalierkulturpflanzenhecke zu ernten.

15. Verfahren zum Vermeiden (800) von Metallpfählen einer Spalierkulturpflanzenhecke für eine bewegliche landwirtschaftliche Maschine nach einem der Ansprüche 12 bis 14, umfassend:

    - Fortbewegen (820) der beweglichen landwirtschaftlichen Maschine parallel zu einer Spalierebene der Hecke;
    - Behandeln (830) der Spalierkulturpflanzenhecke mit dem Arbeitsorgan; und

- ein vorübergehendes Entfernen (860) des Arbeitsorgans in Bezug auf die Spalierebene als Reaktion auf den Empfang durch das Arbeitsorgan des Befehlssignals ($S_{com}$), das von der elektronischen Verwaltungseinheit abgegeben wird.

16. Verfahren zum Vermeiden (800) von Metallpfählen nach Anspruch 15, wobei das vorübergehende Entfernen des Arbeitsorgans mit einer Verzögerung in Bezug auf das Erzeugen des Erkennungssignals eines geneigten Metallpfahls umgesetzt wird, wobei die Verzögerung von einer Fortbewegungsgeschwindigkeit (V, $V_{rel}$) der landwirtschaftlichen Maschine und von mindestens einem aus einer Information zur Neigungsrichtung des Pfahls und einer Neigungsamplitude des Pfahls abhängig ist.

## Claims

1. A device (15) for detecting a metal stake in a trellised cultural plant hedge (60), comprising at least one metal stake sensor (10) designed to be displaced parallel to a trellising plane (PP) of the hedge and arranged to generate a detection signal when it passes in line with a metal stake (70) of the hedge comprising metal stakes, the detection device being **characterised in that** said metal stake sensor includes first and second metal sensors (11, 12) which are arranged to generate respectively first and second measurement signals (S1, S2) when they pass in line with one of the metal stakes (70) of the hedge, said first and second metal sensors being mechanically secured in displacement to each other and arranged to be vertically spaced relative to each other when using said device, the detection device (15) further including a unit (14) for electronic management of said first and second detection signals, configured to receive the first measurement signal (S1) and the second measurement signal (S2) and to, upon detection of a time difference ($\Delta\ t(incl)$) between maximum levels of variation (M1, M2) of the first and second measurement signals, generate a signal ($S_{incl}$) indicative of an inclined state of the metal stake relative to a vertical direction ($D_{vert}$) in the trellising plane (PP).

2. The detection device (15) according to claim 1, wherein an electronic management unit (14) is configured to generate a signal ($S_{sens}$) representative of a direction of inclination of the inclined metal stake on the based on a chronological order between maximum levels of variation (M1, M2) of the first and second measurement signals.

3. The detection device (15) according to claim 1 or 2, wherein the first and second metal sensors (11, 12) each comprise a transmission coil (11A, 12A) and a reception coil (11B, 12B) defining a detection axis (11ax, 12ax) on which a metal stake detection signal generated by the detection coil in response to a signal from the reception coil is maximum when the corresponding sensor passes in line with the metal stake, and wherein the first and second measurement signals (S1, S2) are generated by the detection coil of the first and second sensors (11, 12), respectively.

4. The detection device (15) according to claim 3, comprising a mobile detection gantry (30) along the trellising plane (PP), said detection gantry comprising first and second gantry branches (40A, 40B) designed to, during use, face each other and be displaced parallel to the trellising plane, the first gantry branch (40A) including one of the transmission coil (11A, 12A) and the reception coil (11B, 12B) of the first and second metal sensors (11, 12), the second gantry branch (40B) comprising the other of the transmission coil (11A, 12A) and the reception coil (11B, 12B) of the first and second metal sensors (11, 12), the coils being mounted on the gantry branches so that, during use, the detection axes (11ax, 12ax) of the metal sensors (11, 12) are vertically spaced from each other.

5. The detection device (15) according to claim 4, wherein the first gantry branch (40A) and the second gantry branch (40B) are designed to, during use, frame the trellising plane (PP).

6. The detection device (15) according to claim 4 or 5, wherein the electronic management unit is further configured so as to:

   - receive a signal ($S_v$) representative of a displacement speed (V) of an agricultural machine, generated and sent by the agricultural machine intended to displace the detection device (10);
   - measure a time interval ($\Delta\ t(incl)$) separating maximum levels of variation (M1, M2) of the first and second detection signals (S1, S2); and
   - generate a signal ($S_\alpha$) representative of an amplitude of inclination of the metal stake of the hedge based on the signal ($S_v$) representative of the speed of displacement (V) of the agricultural machine, of the time interval ($\Delta\ t(incl)$) and a vertical spacing (H) between the respective detection axes of the first and second metal sensors (11, 12).

7. The detection device (15) according to claim 6, wherein the electronic management unit is configured to generate the signal ($S_\alpha$) representative of an amplitude of inclination $\alpha$ of the metal stake of the hedge using the formula

$$\alpha = \arctan\left(\frac{V * \Delta\, t(\text{incl}) - L}{H}\right)$$

where V is a variable representative of a speed of displacement of an agricultural machine as indicated by the agricultural machine itself, and where L represents a horizontal spacing between the respective detection axes of the first and the second metal sensor.

8. The device (15) for detecting metal stakes according to any one of the preceding claims, the metal stake sensor further comprising a third metal sensor (13) arranged to generate a third measurement signal (S3) when it passes in line with the metal stake of the hedge, the third metal sensor being mechanically secured in displacement to the first and second metal sensors (11, 12) and horizontally spaced from the first metal sensor (11), wherein the electronic management unit (14) is further configured to receive the third detection signal, and, based on respective reception times (T1, T2, T3) of maximum variation levels (M1, M2, M3) of the first, second and third detection signals (S1, S2, S3), deliver a signal ($S_{Vrev}$) representative of relative speed information ($V_{rel}$) of displacement of the detection device relative to the metal stake of the hedge.

9. The detection device (15) according to claim 7 and claim 8, wherein the electronic management unit is configured to generate the signal ($S_\alpha$) representative of an amplitude of inclination $\alpha'$ of the metal stake of the hedge by using the formula

$$\alpha' = \arctan\left(\frac{V_{rel} * \Delta\, t(\text{incl}) - L}{H}\right)$$

where $V_{rel}$ is a variable representative of a relative speed of displacement between the detection device and the metal stake as determined based on measurement signals from the detection device, and where L represents a horizontal spacing between the respective detection axes (11ax, 12ax) of the first and second metal sensors (11, 12).

10. The device (15) for detecting metal stakes according to claim 8 and claim 4, the third metal sensor (13) comprising a transmission coil (13A) and a reception coil (13B) defining a detection axis (13ax), one of the transmission coil and the reception coil being mounted on the first gantry branch (40A) and the other of the transmission coil and the reception coil being mounted on the second gantry branch (40B), the detection axis of the third metal sensor being, during use of the detection device, horizontally spaced from the axis of the first metal sensor.

11. The detection device (15) according to any one of the preceding claims, wherein the metal sensors (11, 12) are part of pulse induction magnetic detectors (11, 12, 13, 14, 15).

12. A mobile agricultural machine (20) for treating crops in the form of trellised cultural plant hedge, comprising a working member (50) and a metal stake detection device (15) according to any one of the preceding claims mounted upstream of the working body relative to a direction of displacement ($D_{displ}$) of the agricultural machine during a treatment of trellised cultural plant hedges.

13. The agricultural machine (20) according to claim 12, the working member (50) having at least one active state and at least one neutralised state, the working member being designed so as to be driven by the electronic management unit so as to cause a temporary passage from the active state to the neutralised state then a return to the active state in response to the generation of the indicative signal ($S_{incl}$) of an inclined state of the metal stake.

14. The agricultural machine (20) according to any one of claims 12 and 13, wherein the working member comprises at least one set from:

- a pair (52) of cutting heads with rotary blades, the rotary blades being intended to be, during use, oriented horizontally, located on either side of a trellised cultural plant hedge and crossing the trellising plane in their active state;
- two lateral cutting bars (722) intended to be, during use, oriented substantially vertically and a horizontal cutting bar (721) intended to be, during use, oriented substantially horizontally and designed to pass through the trellising plane so as to top the upper end of a trellised cultural plant hedge; and
- two berry detachment sets 732 intended to shake the trellised cultural plant hedge so as to harvest berries from this trellised cultural plant hedge.

15. A method for avoiding (800) metal stakes of a trellised cultural plant hedge for a mobile agricultural machine according to any one of claims 12 to 14, comprising:

- a displacement (820) of the mobile agricultural machine parallel to a trellising plane of the hedge;
- a treatment (830) of the trellised cultural plant hedge with the working body; and
- a temporary distance (860) of the working body relative to the trellising plane in response to the reception by the working body of the control signal ($S_{com}$) delivered by the electronic management unit.

**16.** The method for avoiding (800) metal stakes according to claim 15, wherein the temporary distance of the working member is carried out with a delay relative to the generation of the detection signal of an inclined metal stake, the delay being a function of a speed of displacement (V, $V_{rel}$) of the agricultural machine and at least one of an information item on the direction of inclination of the stake and an amplitude of inclination of the stake.

[Fig. 1]

[Fig. 2]

[Fig. 3A]

[Fig. 3B]

[Fig. 4]

[Fig. 5A]

[Fig. 5B]

50

$D_{vert}$

V

10

11

13

12

$70_{incl}$

$D_{dépl}$

M3

S3

S1

t

[Fig. 5C]

50

V

$D_{vert}$

11

10

13

12

$70_{incl}$

$D_{dépl}$

M1

M3

S3

S1

S2

t

[Fig. 5D]

50

V

$70_{incl}$

10

$D_{vert}$

11

13

12

$D_{dépl}$

M1

M3

S3

S1

M2

S2

t

23

[Fig. 5E]

[Fig. 6A]

[Fig. 6B]

[Fig. 7A]

[Fig. 7B]

[Fig. 8]

800

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2227939 B1
- FR 2878124 A1
- EP 1608216 A